# EUROPEAN PATENT APPLICATION

(11) **EP 2 085 631 A1**
(43) Date of publication of application: **05.08.2009**
(21) Application number: 08002052.2
(22) Date of filing: 04.02.2008
(51) Int. Cl.: F16D 9/06

(54) **Torque protection device and torque transmission assembly**

(71) Applicant: SIEMENS AKTIENGESELLSCHAFT, 80333 München (DE)
(72) Inventor: Knowels, Grahame, Lincoln LN6 3LN (GB)

(57) **Abstract**

A torque protection device (1) is disclosed with an axial direction, a radial direction, a driven element (13) for connecting the torque protection device (1) to a driven output member, a driving element(9) for connecting the torque protection device (1) to a driving input member, and at least one shear pin (17) connecting the driving element (9) to the driven element (13) and having a first end (35) held by the driven element (13) and a second end (25) held by the driving element (9).The shear pin (17) extends from the driven element (13) to the driving element (19) in radial direction of the torque protection device.

## Description

The present invention relates to a torque protection device with an axial direction, a radial direction, a driven element for connecting the torque protection device to a driven output member, a driving element for connecting the torque protection device to a driving input member, and at least one shear pin having a first end held by the driven element, and a second end held by the driving element. The invention further relates to a torque transmission assembly comprising a torque protection device.

Torque protection devices like, e.g., safety hubs are used for torque protection in transmitting a torque from a driving member to a driven member. Usually, a torque protection device which connects a driving member to a driven member is designed to transmit a torque in a certain range. When a maximum torque is exceeded, the torque protection device may experience damage if too much load is transmitted from the driving member to the driven member or vice versa, for example in a sudden brake or stop of one of the members.

To prevent from transmitting too high torques safety hubs are used, which decouple the driving member from the driven member in case the torque becomes too high. Such safety hubs may couple the input member and the output member by means of an oil film which is only able to transmit a torque up to a certain level or by use of shear pins which would shear if a certain torque level is exceeded.

An exemplary application for such safety hubs is a gas turbine installation. There, a driving shaft of the turbine transmits a torque to an input shaft of a generator. In order to reduce the high rotation speed of the driving shaft to a lower speed more suitable for the generator a gear box is arranged between the driving shaft and the input shaft.

In turbine generator drives over torques may be induced by electrical fault torques, which are much larger than the rated drive torque and cyclic in nature, oscillating between positive and negative. Hence, in case of electrical fault torques the generator acts to alternately brake and accelerate the gear box. When the braking and accelerating torques exceed certain values the safety hub stops transmitting the torques, e.g. in case of the use of shear pins by shear pin failure, thereby protecting the turbine and an associated gear box.

In addition, repeated torsional oscillations due to electrical fault torques which are below the settings of the shear pins, i.e. which would not lead to a shear pin failure, the continuing load variations resulting from the oscillations can cause the pins to vibrate and "walk" along the bores thus transferring forces to the bearings of the driving unit and the driven unit. This may result in some cases in failure of both the gearbox and the generator bearings. Where this occurs the cost in terms of repair and downtime is high.

Usually the safety hub is mounted on the generator input shaft and interfaces directly with an annulus coupling of the gear box. However, fitting the safety hub to the annulus coupling of the gear box requires tight alignment tolerances due to the close coupling of the gear box. This makes assembly of the gear box to the generator input shaft difficult and time-consuming.

Moreover, with shear pin safety hubs as known from the state of the art pin replacement and debris after failure would be an issue to be solved. The confined space would appear to make the use of extraction tooling difficult and debris encatchment awkward. An example of a shear pin safety hub is disclosed in JP11131452.

On the other hand, safety hubs based on oil films are expensive and do not really solve the mentioned difficulties problems related to confined space.

With respect to this prior art, it can be seen as an objective of the present invention to provide an improved torque protection device and an improved torque transmission assembly.

These objectives are solved by a torque protection device as claimed in claim 1 and by a torque transmission assembly as claimed in claim 11. The depending claims define further developments of the invention.

An inventive torque protection device has an axial direction and a radial direction. It comprises a driven element for connecting the torque protection device to a driven output member, a driving element for connecting the torque protection device to a driving input member, and at least one shear pin having a first end held by the driven element, and a second end held by the driving element. The shear pin connects the driving element to the driven element and extends from the driven element to the driving element in radial direction of the torque protection device. The inventive torque protection device may be implemented, for example, as a safety hub or a drive train coupling.

Arranging the shear pin in radial direction allows for easily encapsulating the shear pin so that no debris can fall into, for example, a gear box connected to the torque protection device. Moreover, the radial arrangement allows for shear pin removal and replacement in a near vertical position either from above or, if access is made available, more suitably from below. This makes the use of tools easier and also lessens the likelihood of debris loss into the exemplarily mentioned gear box. In addition, the radial orientation of the at least one shear pin, combined with radial maintenance, produces an axially very compact design. This in turn allows the annulus coupling of the exemplarily mentioned gear box to be made longer, which, because the coupling relies on lateral bending to operate, allows an increase in misalignment tolerances between the gear box and the generator.

Moreover the forces produced by radial shear pins that "walk" along the bores in case of oscillations due to electrical fault torques which would not lead to a shear pin failure are kept within the cross section of the torque protection device and are hence not transferred externally to the bearings of the driving units or the driven units. In contrast thereto, in the state of the art concept of the axially aligned shear pin, the "walking" shear pins would transfer forces in axial direction of the torque protection device which, therefore, can ultimately transferred externally to the bearings of the driving units and the driven units like it was mentioned above.

If the driving element is located radially outwards from the driven element the driving element - which would still rotate after failure - can centrifuge away from the driven element which reduces the risk of abrasion due to contact between a still rotating driving element and the non-rotating driven element.

In a special implementation of the inventive torque protection device the driven element comprises a driven element body with a driven element surface section the normal of which extends in radial direction of the torque protection device, and a driven element acceptance in the driven element surface section. Moreover, the driving element comprises, in this special implementation, a driving element body with a driving element surface section the normal of which extends in radial direction of the torque protection device and which is located opposite to the driven element surface section, and a driving element acceptance in the driving element surface section. The shear pin is then held by the driving element acceptance and the driven element acceptance such that it extends between the driven element surface section and the driving element surface section in radial direction of the torque protection device. In this implementation it becomes possible that the driving and the driven element overlap in axial direction of the torque protection device in the region adjoining the surface sections towards the interior of the exemplarily mentioned gear box which provides shielding against debris falling into the gear box after failure.

In the mentioned implementation the driven element acceptance may be a blind hole extending radially from the driven element surface section into the driven element body, and the driving element acceptance may be a through hole extending radially from the driving element surface section through the driving element body. In this case, since the driving element body is located radially outwards from the driven element body, the shear pin can be inserted and removed from radially outwards through the through hole without disassembling the torque protection device, which increases maintenance friendliness.

The outer side of the through hole may be covered with a cover so as to prevent debris after failure from falling out towards the outside of the through hole. Together with the mentioned overlap between the driven element body and the driving element body and the fact that the other acceptance is a blind hole, the cover can make up for an almost complete encapsulation of the shear pin which provides a high safeness against debris falling out of the acceptances in the driven element body and the driving element body during the period after failure and before shutdown, which can last for several hours. With the encapsulation of the shear pins, if failure occurs due to torsional oscillation and fatigue, the damage should be restricted to the shear pins and should never extend beyond the torque protection device

In addition, a gap may be present between the radial outer end of the shear pin and the cover. In case the shear pin is sheared off, the part of the shear pin remaining in the through hole can move away from the driven element due to centrifugal force acting on the shear pin half due to a further rotation of the driving element.

To prevent the shear pin residual in the blind hole of the driven element from moving out of the blind hole in case the blind hole opening is showing downwards after failure the shear pin can be secured to the blind hole by a grub screw extending through the driven element body into the shear pin. When the shear pin fails e.g. in a turbine generator drive due to electrical fault torques hence protecting the turbine and the gear box the generator can rotate further in some circumstances, by being driven as an electrical motor by an external electric source, i.e. the grid. The grub screw then acts to prevent the broken inner part of the pin from centrifuging outwards and causing continued damage and debris.

The shear pin may have a stepped diameter along its axial direction. The stepped diameter can provide a predetermined breaking point and can make extraction of the radial inner half of the pin after failure easier which results in less barring after a failure.

An inventive torque transmission assembly comprises an inventive torque protection device, for example, as a safety hub or a drive train coupling. With the inventive torque protection device the inventive torque transmission assembly is well protected against torques exceeding a given limit including the advantages mentioned with respect to the inventive torque protection device

In addition, the inventive torque transmission assembly may comprises a gear box with an annulus coupling. In such an inventive torque transmission assembly the annulus coupling can be made longer than in the state of the art designs due to the radial orientation of the shear pin. This increases the misalignment tolerances when fixing the torque protection device to the annulus coupling of the gear box.

Further features, properties, and advantages of the present invention will become clear from the following description of embodiments of the invention in conjunction with the accompanying drawings.
- Figure 1: shows a section of a first embodiment of the inventive torque protection device together with part of a gear box.
- Figure 2: shows an enlarged section from figure 1.
- Figure 3: is a diagram for explaining the increase in misalignment tolerances with the safety hub shown in figure 1 and figure 2.
- Figure 4: shows a second embodiment of the inventive torque protection device.

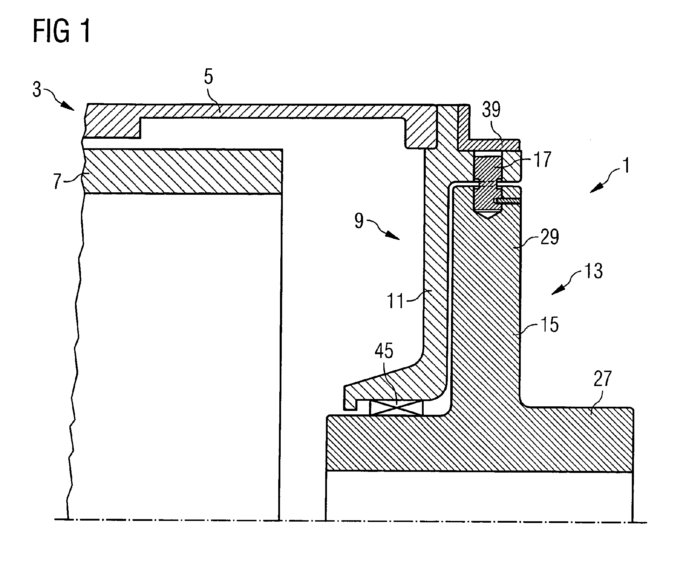

An inventive torque protection device and an inventive torque transmission arrangement will now be described with respect to figures 1 to 3.

Figure 1 shows a section of a safety hub 1 as a firrst embodiment of the inventive torque protection device and part of a gear box 3 with an annulus coupling 5 and an epicyclic gearing which is shown in a schematic fashion by element 7. The gear box 3 is connected to the driving shaft (not shown) of, for example, a gas turbine for transferring its rotational frequency to a lower rotational frequency.

The safety hub 1, which is firmly connected to the annulus coupling 5 of the gear box 3, comprises a driving element 9 with a driving element body 11 and a driven element 13 with a driven element body 15. It is fixed to the annulus coupling 5 by the driving element 9. Hence, the driving torque is transmitted from the annulus coupling 5 of the gear box 3, which constitutes a driving input member, to the driving element 9 of the gear box 1. The driven element 13 of the safety hub 1 is fixed to an input shaft (not shown) of, for example, a generator, in order to transmit the driving torque to the generator input shaft. The input shaft constitutes a driven output member.

A shear pin 17 is connecting the driving element to the driven element so as to transmit the driving torque exerted by the driving element 9 to the driven element 13.The shear pin 17 is designed such that it is sheared if the driven element is braked. Braking leads to a torque difference between the driving element 9 and the driven element 13. The shear pin 17 then shears as soon as the torque difference level exceeds a certain value. By this measure the generator input shaft can be prevented from damage due to the torque provided by the gear box.

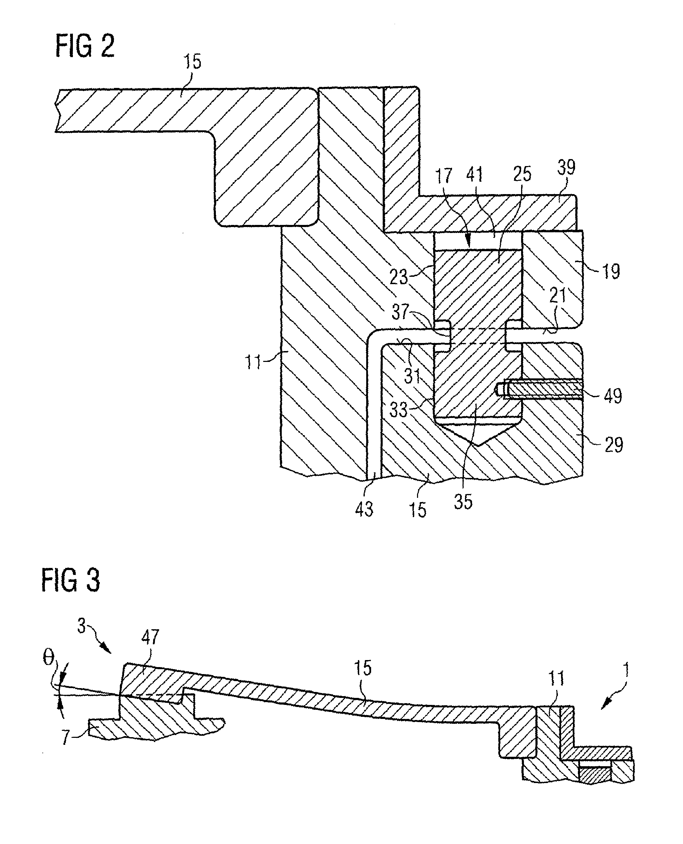

The shear pin 17 and its arrangement between the driving element 9 and the driven element 13 will now be described with respect to figure 2 which shows the shear pin 17 and the respective parts of the driving element body 11 and the driven element body 15 in an enlarged view.

The driving element body 11 comprises an annular rib 19 which extends in axial direction of the hub and which comprises a element surface section 21 the normal of which shows in radial direction of the safety hub 1. A through hole 23 extends in radial direction through the annular rib. The through hole 23 forms an acceptance for a radial outer part 25 of the shear pin 17.

The driven element body comprises a cylindrical element 27 (see figure 1) to which the input shaft, for example of a generator, can be fixed. A rib 29 extends radially outwards from the cylindrical element 27. This rib is called radial rib 29 in the following. The radial outer surface 31 of the radial rib 29 forms a driven element surface section the normal of which shows radially outwards. The driven element surface section 31 is located opposite to the driving element surface section 21.

A blind hole 33 or blind bore is formed in the radial rib 29 outgoing from the driven element surface section 31. This blind hole 33 is aligned with the through hole 23 in the annular rib 19. The shear pin 17 is located with its radial outer part 25 in the through hole 23 while its radial inner part 35 is located in the blind hole 33. The radial outer part 25 and the radial inner part 35 are connected to each other by a narrow section 37 which forms, interalia, a predetermined breaking point of the shear pin. The length of the shear pin 17 is chosen such that its radial outer part 25 does not fully extend through the through hole 23.

A cover 39 is removably fixed to radial outer surface of the annular rib 19 so as to cover the radial outer opening of the through hole 23. Since the radial outer part 25 of the shear pin 17 does not extend fully through the through hole, a gap 41 remains between the radial outer surface of the shear pin and the cover 39.

After failure, the driving element 9 usually rotates further due to its connection to the annulus coupling 15 while the driven element 13 stops rotating. The gap 41 provides space for the radial outer part 25 of the shear pin 17 to move radially outwards in case the radial outer part 25 and the radial inner part 35 are disconnected after a failure. This outwards movement of the radial outer part 25 prevents from further contact between the radial outer part and the radial inner part or the driven element surface section 31. By this measure debris producing contact and abrasion can be prevented.

A bearing 45 is located between the radial inner end of the driving element body 11 and the cylindrical element 27 to allow the driving element 9 to rotate smoothly around the cylindrical body 27. As can be seen in figure 1, an extension of the driving element body 11 towards the cylindrical element 27 provides shielding of the gear box 3 against debris of a failure falling into the gear box. In the present embodiment the driving element 9 extends along the whole radial rib 29 to the cylindrical element 27 (see figure 1) and is spaced from the radial rib 29 by a small gap 43.

Furthermore, the cover 39 prevents the radial outer part 25 of the shear pin from being driven radially out of the through hole due to centrifugal forces after failure. At the same time debris is also prevented from being driven out of the through hole 23. In addition, debris present in the through hole 23 cannot easily fall into the gap 43 between the driving element 9 and the driven element 13 since the centrifugal force tends to drive the debris radially outwards.

On the other hand, the radial inner part 35 of the shear pin 17 is prevented from falling out of the radial rib 29 when it shows downwards by a grub screw 49 extending in axial direction through the radial rib 29 of the driven element body 15 into the radial inner part 35 of the shear pin 17.

The design described with respect to figure 2 provides a largely encapsulated shear pin 17. Due to the encapsulation, debris can be prevented from doing harm to the gear box or the device, the input shaft of which is connected to the driven element 11, for example a generator.

In a torque transmission assembly comprising a gear box and a safety hub, as it is shown in figure 1, the annulus coupling 15 of the safety hub can be longer than in a state of the art assembly. Hence, a radial misalignment of safety hub 1 relative to the gear box 3 leads to a smaller slope Θ between the outer gearing of the epicyclic gearing 7 and sprocket 47 of the annulus coupling 15. As can be seen from figure 3, moving the safety hub 1 closer towards the epicyclic gear 7 without reducing the radial offset between each other, i.e. shortening the axial length of the annulus coupling 15 would lead to an increase in the slope Θ. The result would be increased bending of the coupling 15 causing higher loads, wear etc. on the sprocket 47. The longer annular coupling 15, for the same acceptable applied load on the sprocket 47, allows a greater radial offset, i.e. misalignment tolerance, to be accommodated.

Although the inventive torque protection device has been described with respect to turbo-gensets it can also be used in other drive trains where torque protection is required, i.e. machine tools, paper mills, rock crushers etc.

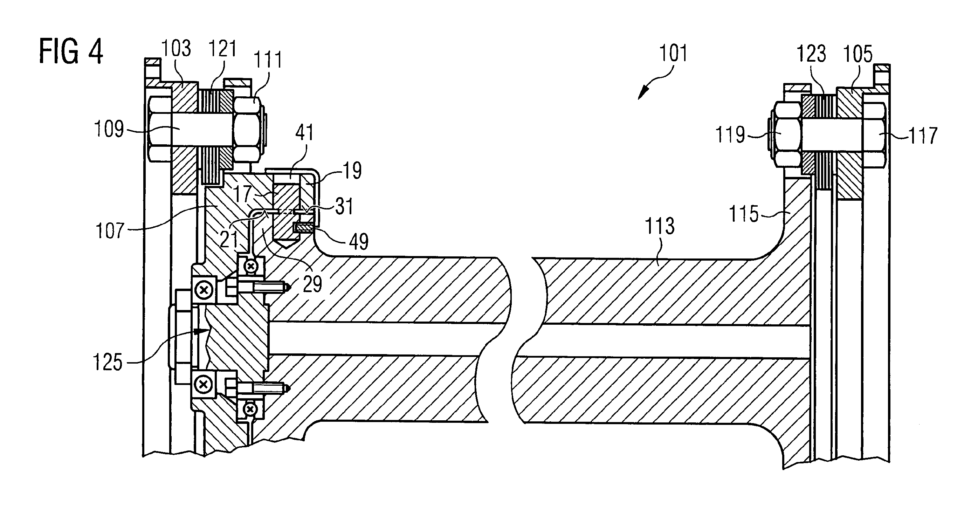

A second embodiment of the inventive torque protection device is shown in figure 4. This figure shows a drive train coupling with radial shear pin design. Elements which correspond to elements of the safety hub shown in figures 1 and 2 are designated with the same reference numerals as in figures 1 and 2 and will not be described again in order to avoid repetitions. The drive train coupling can, for example, be part of a machine tool, a paper mill, a rock crusher, or any other machinery in which driving torques are transmitted from one machine element to an other machine element.

The drive train coupling 101 is, on the one side, fixed to a drive flange 103 which constitutes a driving input member and which may, for example, be connected to an electric motor of a lathe by means of a driving element 107. On the other side it is connected to a driven flange 105, which constitutes a driven output member, by means of a driven element 113, 115 of the drive train coupling 101. The driven output member may, e.g., be connected to a holder for holding a work piece to be handled.

The driving element of the drive train coupling 101 is implemented as an element flange 107 which is connected to the drive flange 103 by means of screws 109 and nuts 111. Furthermore, elastic elements 121 surround the screws between the drive flange 103 and the element flange 107.

The driven element is implemented as a shaft 113 with a flange 115. It is fixed to the driven flange 105 by means of screws 117 extending through the flanges 105, 115, and nuts 119. Furthermore, elastic elements 123 surround the screws between the driven flange 117 and the flange 115. The shaft 113 serves, among other things, as a spacer.

The element flange 107 comprises an annular rib 19 that extend in axial direction of the drive train coupling 101. Through holes 23 extend through the annular rib 19 in radial direction of the drive train coupling 101. On the other side, the shaft 113 comprises a radial rib 29 at its end the radial outer surface 31 of which shows towards the radial inner surface 21 of the annular rib 19. Blind holes 33 are present in the radial outer surface 31 of radial rib 29 and located such that they are in line with the through holes 23.

Radial shear pins 17 extend with a radial inner part 35 through the blind holes 33 and with a radial outer part 25 partly through the trough holes 23. The radial inner parts 35 are secured to the blind holes 33 by means of grub screws 49 extending in axial direction through the radial rib 19 into the shear pins 17 to prevent them from centrifuging outwards.

In addition, the radial outer side of the through holes 23 are provided with covers 39 for preventing shear pin debris from centrifuging out of the through holes 23 in case of a shear pin failure. Instead of individual covers 39 for each through hole 23, all through holes can also be covered by a single cover extending across the outer circumference of the annular rib 19. This is also true for the safety hub of the first embodiment.

A bearing assembly 125 is present between the shaft 113 and the drive flange 103 to allow a rotational movement between them after a shear pin failure.

The design and the function of the through holes 23, the blind holes 33, the shear pins 17, the covers 39 and the grub screws 49 correspond the design and the function of these elements in the first embodiment.

The described torque protection device with an encapsulated, radially aligned shear pin design has several advantages over the axial shear pin design in the state of the art:
- The encapsulated design prevents the loss of debris during the period after failure and before shutdown, which can last several hours.
- Shear pin removal and replacement can be carried out in a nearly vertical position, either from above, or if access is made available, more suitably from below. This makes the use of tools easier and also lessens the likelihood of debris loss into, e.g., a gear box.
- The stepped diameter of the shear pin makes extraction of its inner half easier, after failure which leads to less barring of the assembly.
- Radial orientation of the shear pins, combined with radial maintenance, produces an a axially very compact design. This in turn allows, e.g., a gear box' annulus coupling to be made longer, which, because the coupling relies on lateral bending to operate, should allow an increase in misalignment tolerances between the gear box and the torque protection device, which could result from the location of the driven unit, for example a generator.
- After failure, the outer half of the shear pin can be made to separate from the inner half by centrifugal force, thereby minimising the amount of secondary damage and debris.

## Claims

1. A torque protection device (1, 101) with an axial direction, a radial direction, a driven element (13, 113) for connecting the torque protection device (1, 101) to a driven output member (105), a driving element(9, 107) for connecting the torque protection device (1, 101) to a driving input member (5, 103), and at least one shear pin (17) connecting the driving element (9, 1097) to the driven element (13, 113) and having a first end (35) held by the driven element (13, 113) and a second end (25) held by the driving element (9, 107),
**characterised in that**
the shear pin (17) extends from the driven element (13, 113) to the driving element (9, 107) in radial direction of the torque protection device (1, 101).

2. The torque protection device (1, 101) as claimed in claim 1,
**characterised in that**
the driving element (9, 107) is located radially outwards from the driven element (13, 113).

3. the torque protection device (1, 101) as claimed in claim 2,
**characterised in that**
- the driven element (13, 113) comprises a driven element body (15) with a driven element surface section (31) the normal of which extends in radial direction of the torque protection device (1, 101), and a driven element acceptance (33) in the driven element surface section (31),
- the driving element (9, 107) comprises a driving element body (11) with a driving element surface section (21) the normal of which extends in radial direction of the torque protection device (1, 101) and which is located opposite to the driven element surface section (31), and a driving element acceptance (23) in the driving element surface section (21),
- and the shear pin (17) is held by the driven element acceptance (33) and the driving element acceptance (23) such that it extends between the driven element surface section (31) and the driving element surface section (21) in radial direction of the torque protection device (1, 101).

4. The torque protection device (1, 101) as claimed in claim 3,
**characterised in that**
the driven element acceptance is a blind hole (33) extending radially from the driven element surface section (31) into the driven element body (15), and the driving element acceptance is a through hole (23) extending radially from the driving element surface section (21) through the driving element body (11).

5. The torque protection device (1, 101) as claimed in claim 4,
**characterised in**
a cover (39) at the radial outer side of the trough hole (23).

6. The torque protection device (1, 101) as claimed in claim 5,
**characterised in**
a gap (41) is present between the radial outer end of the shear pin (17) and the cover (39).

7. The torque protection device (1, 101) as claimed in any of the claims 4 to 6,
**characterised in**
a grub screw (49) extending through the driven element body (15) into the shear pin (17).

8. The torque protection device (1, 101) as claimed in any of the claims 4 to 7,
**characterised in that**
the shear pin (17) has a stepped diameter along its axial direction.

9. The torque protection device (1, 101) as claimed in any of the claims 1 to 8,
**characterised in that**
it is implemented as a safety hub (1).

10. The torque protection device (1, 101) as claimed in any of the claims 1 to 8,
**characterised in that**
it is implemented as drive train coupling (101).

11. A torque transmission assembly comprising a torque protection device (1, 101) as claimed in any of the claims 1 to 10.

12. The torque transmission assembly as claimed in claim 11, which further comprises a gear box (3) with an annulus coupling (15).
